(19) Europäisches Patentamt
European Patent Office
Office européen des brevets

(11) EP 4 787 220 A1

(12) EUROPEAN PATENT APPLICATION

(43) Date of publication:
05.08.2026 Bulletin 2026/32

(21) Application number: 25154891.3

(22) Date of filing: 30.01.2025

(51) International Patent Classification (IPC):
G06F 30/27 $^{(2020.01)}$   G06F 30/30 $^{(2020.01)}$
G06N 20/00 $^{(2019.01)}$   G06F 119/04 $^{(2020.01)}$

(52) Cooperative Patent Classification (CPC):
G06F 30/27; G06F 30/30; G06N 20/00;
G06F 2119/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Siemens Aktiengesellschaft
80333 München (DE)

(72) Inventors:
• Hein, Daniel
81549 München (DE)
• Limmer, Steffen
80636 München (DE)
• Otte, Clemens
81739 München (DE)

(74) Representative: Siemens Patent Attorneys
Postfach 22 16 34
80506 München (DE)

(54) COMPUTER IMPLEMENTED METHOD FOR DETERMINING A MACHINE LEARNING MODEL FOR AN ELECTRICAL CIRCUIT, MACHINE LEARNING MODEL FOR THE ELECTRICAL CIRCUIT AND COMPUTER PROGRAM FOR DETERMINING THE MACHINE LEARNING MODEL

(57) Computer implemented method for determining a machine learning model for an electrical circuit, machine learning model for the electrical circuit and computer program for determining the machine learning model

The invention relates to a computer implemented method for determining a machine learning model for an electrical circuit with at least one electrical component and for determining of at least one performance metric of the electrical circuit, wherein following steps are executed:
a) Generating of a data set for the electrical circuit by capturing of a value of at least one electrical parameter of the electrical circuit;
b) Generating of an analytical formula for the electrical circuit by applying of a symbolic optimization procedure on the electrical data set, wherein a complexity of the analytical formula which is measured by at least one formula parameter fits the data set; and
c) Utilizing of the analytical formula for the determining of the machine learning model and/or for the determining of the performance metric.

The electrical component is a battery. With the help of the invention a machine learning model for the electrical circuit can be provided. With the machine learning model a prediction of performance metrics of the battery such as state-of-health (SOH) of end-of-life (EOL) quantities is possible.

FIG 1

**Description**

BACKGROUND OF THE INVENTION

1. Field of the invention

The invention refers to a computer implemented method for determining a machine learning model for an electrical circuit, a machine learning model for the electrical circuit and a computer program for determining the machine learning model.

2. Description of the related art

An accurate model of an electrical circuit provides a comprehensive understanding of a behavior of the electrical circuit. The model captures relationships between various electrical components of the electrical circuit and electrical parameters of the electrical circuit, like flow of current, voltage distribution or power dissipation. By analyzing these models, engineers can gain insights into the functionality, performance, and limitations of the electrical circuit.
The model of the electrical circuit allows engineers to evaluate the performance of electrical circuit under different operating conditions. By simulating the model, engineers can predict and analyze key performance metrics of the electrical circuit such as voltage levels, current flows, power consumption, signal integrity, noise levels, and frequency response. This evaluation helps identifying potential issues, optimizing the electrical circuit and ensuring desired performance criteria.
Accurate models of the electrical circuit facilitate design optimization by enabling engineers to explore different design alternatives and configurations of the electrical circuit. Through simulation and analysis, engineers can evaluate the impact of different component values, topologies, and system parameters on the overall performance. This optimization process helps in achieving desired design specifications, improving efficiency, reducing cost, and ensuring reliable operation.
Accurate circuit models are valuable for fault analysis and troubleshooting tasks. By simulating the model under faulty conditions or by introducing specific fault scenarios, engineers can identify the causes of failures, diagnose problems, and propose solutions. This analysis helps in identifying faulty components, predicting failure modes, and devising strategies for fault mitigation and system reliability improvement.
Electro Impedance Spectroscopy (EIS) can be used to measure the complex resistance of the electrical circuit at many different frequencies in order to produce accurate equivalent circuit models (ECM). In a subsequent step, the EIS or ECM is often used to extract features which are used to predict performance metrics such as state-of-health (SOH) of end-of-life (EOL) quantities of a battery as an electrical component of the electrical circuit. However, measuring EIS is costly especially for low and/or many frequencies due to a long measurement runtime.
In some particular cases, an appropriate equivalent circuit model is known so that the component values (e.g. Ohmic resistances, inductances, ...) can be calculated. In these cases, the calculated values are often used as a compact representation for downstream tasks such as prediction of SOH and EOL.
If an equivalent circuit model is not known, a suitable model may be obtained via a heuristic or exhaustive search that tries to model the available information by an equivalent circuit comprising serial and parallel branches and different circuit elements such as capacitor, resistor, inductor.
It is an objective of the invention to provide a possibility to identify an appropriate machine learning model for an arbitrary electrical circuit. This objective is achieved by the invention specified in the claims.
For achieving of the objective of the invention a computer implemented method for determining a machine learning model for an electrical circuit with at least one electrical component and for determining of at least one performance metric of the electrical circuit is provided, wherein following steps are executed:

a) Generating of a data set for the electrical circuit by providing of a value of at least one electrical parameter of the electrical circuit;

b) Generating of an analytical formula for the electrical circuit by applying of a symbolic optimization procedure on the electrical data set, wherein a complexity of the analytical formula which is measured by at least one formula parameter fits the data set; and

c) Utilizing of the analytical formula for the determining of the machine learning model and/or for the determining of the performance metric.

Based on the analytical formula or based on at least one analytical formula parameter of the analytical formula the machine learning model and/or the performance metric of the electrical circuit are determined.

The analytical formula can not only be used for the determining of the machine learning model. In an embodiment, an analytical formula of the analytical formula is used as input for the machine learning model, too.

Concerning another aspect of the invention a machine learning model for an electrical circuit is provided, wherein the machine learing model is determined by the computer implemented method.

In addition, a computer program product for determining the machine learning model is provided. The computer program product comprises a symbolic optimization tool for an execution of the applying of symbolic optimization on the provided electrical data. The computer program product is configured such that the method for determining a machine learning model for an electrical circuit can be executed.

The performance metric of the electrical circuit represents one or more electrical parameter of the electrical circuit. For instance, the electrical parameter of the electrical circuit is selected from the group consisting of impedance, current and voltage. The performance metric comprise measurable electrical parameter.

Instead of searching equivalent circuit models, the proposed approach is to use symbolic optimization to find an analytical formula of minimal complexity in order to fit a given data set of electrical circuit. The complexity can be measured by the number of basic arithmetic operations (addition, subtraction, multiplication, division). In an embodiment of the invention, for the analytical formula at least one formula parameter is used which is selected from the group consisting of number of basic arithmetic operations, number of floating constants and/or number of integer constants.

With the providing of a value or the electrical parameter a capturing of a value or the electrical parameter is comprised. The value of the electrical parameter can be measured (real-time measurement) or can be stored temporarily. So, concerning a further embodiment of the invention, a value of the electrical parameter is used which is a historical value of the electrical parameter and/or a current value of the electrical parameter.

In an embodiment of the invention, for the generating of the data set an additional providing of an additional value of at least one additional physical parameter affecting at least one electrical property of the electrical circuit is used. The additional parameter can comprise a physical parameter of the electrical component, e.g. a temperature of the electrical component or a dimension of the electrical component like a thickness of the electrical component. For an embodiment of the invention, an additional physical parameter is used which refers to an ambient atmosphere of the electrical circuit. For instance, such an additional physical parameter refers to a temperatur or humidity of the surrounding atmosphere of the electrical circuit or of the electrical component of the electrical circuit. For instance, the additional physical parameter concerns the surrounding of the electrical circuit or a component of the electrical circuit like ambient pressure, air quality like gas concentration and particulate matter concentration. Production parameter for the electrical ccomponent (e.g. a battery) can be used, too.

Like for the value of the electrical parameter of the electrical circuit, the additional value of the additional physical paramenter can be a currently measured parameter (result of a real-time measurement) or can be a stored parameter (result of a measurement in the past). In addition, a value of the parameter can be used which is estimated for the future (expected value). So, in an embodiment of the invention, an additional value of the additional physical parameter is used which is selected from the group consisting of a current additional value, a historical additional value and/or a future additional value of the physical parameter.

The invention relates to the determining of a machine learning model for an electrical circuit with every kind of electrical component. Especially, a prediction of the characteristics of a battery is important. Therefore, in an embodiment of the invention, a battery with at least one battery cell is used as electrical component of the electrical circuit. Consequently, for the performance metric of the electrical circuit a performance metric of the battery is used and the performance metric of the battery is selected from the group consisting of state-of-health and end-of-life.

The symbolic optimization can be based on different mathematical functions. In an embodiment of the invention, for the symbolic optimization at least one rational function with a minimal number of complex-valued coefficients is used.

Concerning a furher embodiment, a knowledge about there symbolic optimization is used for the generating of the electrical data set.

Following advantages of the invention can be stressed:

- Compared to traditional equivalent circuit models or direct usage of EIS data, fewer parameters are needed for a similar approximation quality. Fewer parameters are in this case favorable as the downstream machine learning model can be simpler and have better generalization quality.

- Improved interpretabilty is possible because the representation of a spectrum (by e.g., a rational function obtained via Symbolic Optimization) can be matched with electrochemical knowledge.

- It is not necessary to define a specific equivalent circuit model upfront, whose parameters are then fitted. Instead of that, the determining (search) covers both, the search of a suitable structure (e.g., of the complex-valued rational function) and its parameters.

BRIEF DESCRIPTION OF THE DRAWINGS

Further features and advantages of the invention are produced from the description of an exemplary embodiment with reference to the drawings. The drawings are schematic.

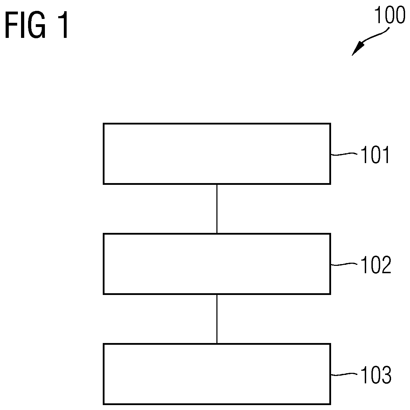

Figure 1 shows the computer implemented method for determining a machine learning model for an electrical.

Figure 2 shows details of a first example of the computer implemented method.

Figure 3 shows a details of a second example of the computer implemented method.

DETAILED DESCRIPTION OF THE INVENTION

Basis of both examples is an electrical ciruit 1. The electrical circuit comprises a number of batteries (electrical components) 11. For the electrical circuit a machine learnig model and at least one performance metric of the electrical circuit are determined with following steps:

a) Generating of a data set for the electrical circuit by providing of a value of at least one electrical parameter of the electrical circuit.

b) Generating of an analytical formula for the electrical circuit by applying of a symbolic optimization procedure on the electrical data set, wherein a complexity of the analytical formula which is measured by at least one formula parameter fits the data set; and

c) Utilizing of the analytical formula for the determining of the machine learning model and/or for the determining of the performance metric.

For the generating of the data set a collecting and selecting of a batch of battery measurement data (e.g., a batch of initial battery measurements) are carried out. The data of the data set are captured.

The applying of the symbolic optimization procedure results in in improved analysis capabilities (e.g. prediction of EIS measurement for different temperatures) and/or in optimizing production of the battery cell.

The complexity of the analytical formula is measured by the number of basic arithmetic operations and/or by the number of floating/integer constants that appear in a particular discovered formula. The complexity can be prescribed. For instance, a rational function with a minimal number of complex-valued coefficients for battery measurements is prescribed.

In a subsequent step, the analytical formula and its coefficients are used as a more compact representation to predict SOH and/or EOL of the battery. The analytical formula can be used for a reduction of an EIS measurement effort for repeated measurements after the defined amount of charging cycles, too.

In an alternative embodiment, a knowledge about the symbolic formula is used to reduce the measurement effort in subsequent measurements (e.g., after defined numbers of charging cycles).

Concerning a further alternative embodiment, additional physical parameters are used for the data set. For instance, these additional physical parameters are production parameters like shear rate or viscosity or data for a slurry mixing for the producing of the battery. Environmental parameters of battery like temperature or humidity can be used as additional physical parameters, too .

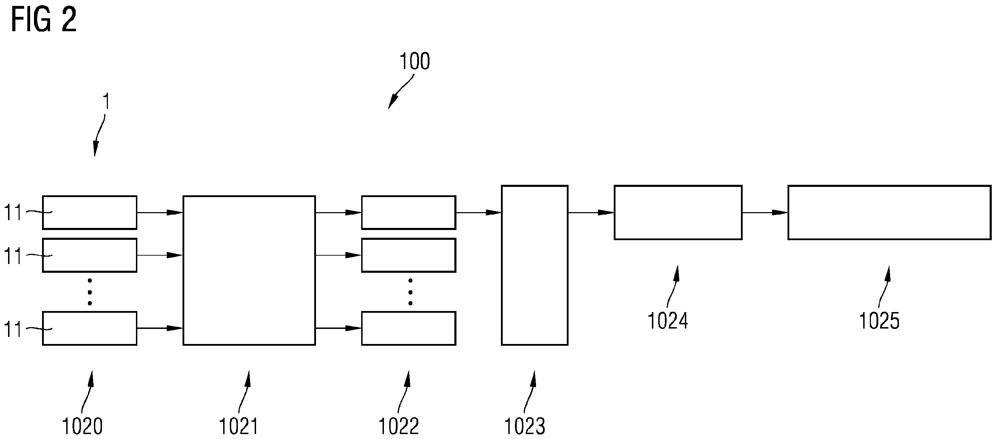

Focussing on the example concerning figure 2 following details of the computer implemented method are described:

With a first step 1020, values of electrical parameters of the batteries 11 of the electrical circuit 1 are collected resulting in a data set. Next, a symbolic optimization is applied on the data set (step 1021) resulting in analytical (symbolic) formula 1022. For instance, an analytical formula can be as follows:

$$0.2 - 0.3i + \frac{-0.1 - 0.2i}{-2.4x - 4.0 + 5.3i} \tag{1}$$

$$0.4 - 0.2i + \frac{-0.2 - 0.3i}{-2.3x - 4.2 + 5.5} \tag{2}$$

With the analytical formula (1) a machine learning input 1023 is generated. The corresponding input can be as

follows

$$\begin{pmatrix} 0.2 \\ -0.3 \\ -0.1 \\ -0.2 \\ -2.4 \\ -4.0 \\ 5.3 \end{pmatrix}$$

A proper machine learning method step 1024 is applied on the machine learning input resulting in a machine learning output 1025. For instance, the machine learning output includes an EOL of 250 cycles and an SOH of 60%.

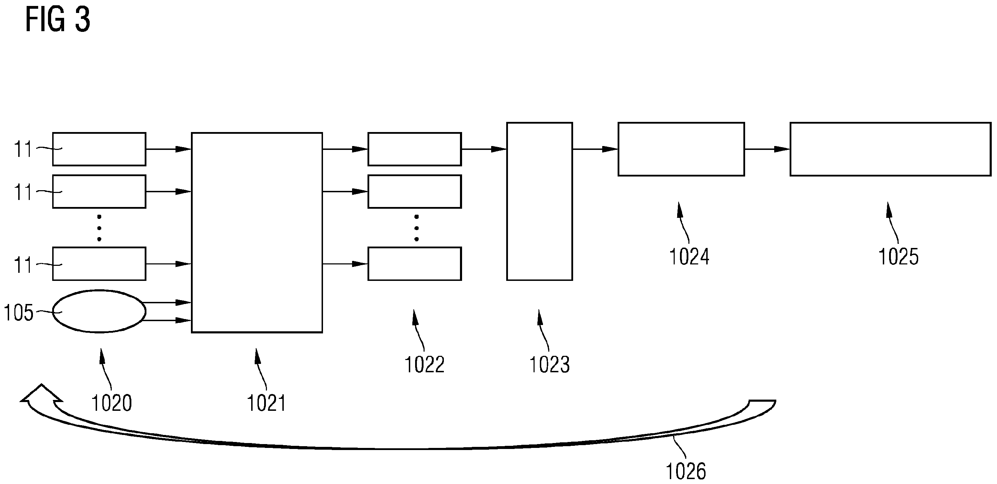

Concerning the example 2 (figure 3) improved production parameters for the batteries should be provided. For instance, the production parameters refer to shear viscosity of a slurry which is used for the production of the batteries. A value of the shear viscosity 105 is used as additional value of an additional physical parameter. The additional value is added to the data set.

Concerning the amended data set, the symbolic optimization prodedure is adapted. This results in an adapted machine learning input. For instance, the machine learning input is as follows:

$$\begin{pmatrix} 0.2 \\ -0.3 \\ -0.1 \\ -0.2 \\ -2.4 \\ -4.0 \\ \text{shear}=0.3 \\ \text{visc}=0.2 \end{pmatrix}$$

In order to find optimized results an iterative process can be implemented. For that, the machine learning output of a first iteration step used for the data set for a subsequent iteration step (indicated with referene 1026) .

**Claims**

1. Computer implemented method (100) for determining a machine learning model for an electrical circuit (1) with at least one electrical component (11) and for determining of at least one performance metric of the electrical circuit (1), wherein following steps are executed:

   a) Generating (101) of a data set for the electrical circuit (1) by providing of a value of at least one electrical parameter of the electrical circuit (1);
   b) Generating (102) of an analytical formula for the electrical circuit (1) by applying of a symbolic optimization procedure on the electrical data set, wherein a complexity of the analytical formula which is measured by at least one formula parameter fits the data set; and
   c) Utilizing (103) of the analytical formula for the determining of the machine learning model and/or for the determining of the performance metric.

2. Method according to one claim 1, wherein at least one analytical formula parameter of the analytical formula is used as input for the machine learning model.

3. Method according to one claim 1 or 2, wherein for the analytical formula at least one formula parameter is used which is selected from the group consisting of number of basic arithmetic operations, number of floating constants and/or number of integer constants.

4. Method according to one of the claims 1 to 3, wherein a value of the electrical parameter is used which is a historical value of the electrical parameter and/or a current value of the electrical parameter.

5. Method according to one of the claims 1 to 4, wherein for the generating of the data set an additional providing of an additional value of at least one additional physical parameter affecting at least one electrical property of the electrical circuit is used.

6. Method according to claim 5, wherein an additional physical parameter of the additional physical parameter is used which refers to an ambient atmosphere of the electrical circuit.

7. Method according to claim 6, wherein an additional value of the additional physical parameter is used which is selected from the group consisting of a historical additional value, a current additional value and/or a future additional value of the physical parameter.

8. Method according to one of the claims 1 to 7, wherein a battery is used as electrical component of the electrical circuit.

9. Method according to claim 8, wherein for performance metric of the electrical circuit a performance metric of the battery is used and the performance metric of the battery is selected from the group consisting of state-of-health and end-of-life.

10. Method according to one of the claims 1 to 9, wherein for the symbolic optimization at least one rational function with a minimal number of complex-valued coefficients is used.

11. Method according to one of the claims 1 to 10, wherein a knowledge about the symbolic optimization is used for the generating of the electrical data set.

12. Machine learning model for an electrical circuit which is determined by a method according to one of the claims 1 to 11.

13. Computer program product for determining the machine learning model according to claim 12, wherein the computer program product comprises a symbolic optimization tool for an execution of the applying of symbolic optimization procedure on the provided electrical data.

FIG 1

100

101

102

103

EP 4 787 220 A1

FIG 2

FIG 3

Europäisches
Patentamt

European
Patent Office

Office européen
des brevets

# EUROPEAN SEARCH REPORT

**Application Number**

EP 25 15 4891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAO HANG ET AL: "Novel Lithium-Ion Battery State-of-Health Estimation Method Using a Genetic Programming Model", IEEE ACCESS, IEEE, USA, vol. 8, 19 May 2020 (2020-05-19), pages 95333-95344, XP011791235, DOI: 10.1109/ACCESS.2020.2995899 [retrieved on 2020-05-29] * abstract * * page 2, right column, second paragraph * * sections 4.1, 4.2, 5.1, 7 * * appendix B * * the whole document * ----- | 1-13 | INV. G06F30/27 G06F30/30 G06N20/00 ADD. G06F119/04 |
| X | AKHIL GARG ET AL: "Aging model development based on multidisciplinary parameters for lithium-ion batteries", INTERNATIONAL JOURNAL OF ENERGY RESEARCH, WILEY, CHICHESTER, GB, vol. 44, no. 4, 29 December 2019 (2019-12-29), pages 2801-2818, XP071646157, ISSN: 0363-907X, DOI: 10.1002/ER.5096 * abstract * * figures 1, 7 * * Table 2 * * sections II, III.A-B, IV.C * * the whole document * ----- -/-- | 1-13 | |

| TECHNICAL FIELDS SEARCHED (IPC) |
|---|
| G06F G06N |

The present search report has been drawn up for all claims

| Place of search | Date of completion of the search | Examiner |
|---|---|---|
| Munich | 1 July 2025 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 15 4891

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI XUEBIN ET AL: "Li-ion battery state of health prediction through metaheuristic algorithms and genetic programming", ENERGY REPORTS, vol. 12, 20 June 2024 (2024-06-20), pages 368-380, XP093291228, ISSN: 2352-4847, DOI: 10.1016/j.egyr.2024.06.038 Retrieved from the Internet: URL:https://www.sciencedirect.com/science/article/pii/S2352484724003937> [retrieved on 2025-07-01] * abstract * * sections 3.1-3.3, 3.5 * * figures 2, 3 * * table 4 * * the whole document * ----- | 1-13 | |
| | | | **TECHNICAL FIELDS SEARCHED (IPC)** |

The present search report has been drawn up for all claims

| Place of search | Date of completion of the search | Examiner |
|---|---|---|
| Munich | 1 July 2025 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)